# EUROPEAN PATENT APPLICATION

(11) **EP 4 769 642 A1**
(43) Date of publication of application: **01.07.2026**
(21) Application number: 24907939.3
(22) Date of filing: 09.12.2024
(51) Int. Cl.: H01M 10/48, H01M 50/519, H01M 50/107, H01M 10/04, H01M 50/512, H01M 50/59, H01M 50/588

(54) **BATTERY ASSEMBLY**

(30) Priority: 19.12.2023 KR 20230185315
(71) Applicant: LG Energy Solution, Ltd., Seoul 07335 (KR)
(72) Inventor: LIM, Hyun Jung, Daejeon 34122 (KR)
(74) Representative: Goddar, Heinz J.
(86) International application number: PCT/KR2024/020057
(87) International publication number: WO 2025/135655

(57) **Abstract**

A battery assembly according to an embodiment of the present disclosure may include a pair of battery cells connected in parallel to each other, a circuit board disposed at one end of the pair of battery cells to be electrically connected to the pair of battery cells, and a wire thermistor provided to sense temperatures of the pair of battery cells and to be electrically connected to the pair of battery cells and the circuit board.

## Description

### TECHNICAL FIELD

### CROSS-REFERENCE TO RELATED APPLICATIONS

The present application claims priority to Korean Patent Application No. 10-2023-0185315 filed on December 19, 2023 in the Republic of Korea, the disclosures of which are incorporated herein by reference.

### TECHNICAL FIELD

The present disclosure relates to a battery assembly provided in a battery pack of an electronic device.

### BACKGROUND ART

Due to recent environmental problems and consumer rights issues, all electronic devices sold in Europe, with some exceptions, should enable consumers to directly replace batteries thereof. However, most electronic cigarettes currently available on the market have built-in batteries as cells or packs inside the system, so that there is a need for development of a new pack to comply with EU regulations.

Therefore, a holder in which the cigarette is placed, heated and smoked, and a charging pack for charging the holder are required, and in particular, the battery assembly used in the charging pack should be easily replaceable by consumers while securing temperature stability.

The background technology described above is possessed or acquired by the inventor in the process of deriving the disclosure content of this application, and cannot necessarily be said to be a known technology disclosed to the public prior to the present application.

### SUMMARY

### TECHNICAL PROBLEM

The present disclosure is designed to solve the problems of the related art, and
therefore the present disclosure is directed to providing a battery assembly capable of securing temperature stability through temperature measurement of a battery cell.

The present disclosure is also directed to providing a battery assembly capable of improving processability by electrically connecting a negative electrode of a battery cell and a circuit board through a thermistor.

### TECHNICAL SOLUTION

A battery assembly according to an embodiment of the present disclosure may include a pair of battery cells connected in parallel to each other, a circuit board disposed at one end of the pair of battery cells to be electrically connected to the pair of battery cells, and a wire thermistor provided to sense temperatures of the pair of battery cells and to be electrically connected to the pair of battery cells and the circuit board. A battery assembly according to an embodiment of the present disclosure may include a pair of battery cells connected in parallel to each other, a circuit board disposed at one end of the pair of battery cells to be electrically connected to the pair of battery cells, and a wire thermistor provided to sense temperatures of the pair of battery cells and to be electrically connected to the pair of battery cells and the circuit board.

The pair of battery cells may have a cylindrical shape having a longitudinal direction and be disposed parallel to each other, and the wire thermistor may be positioned between the pair of battery cells.

The battery assembly may further include a metal plate connecting the pair of battery cells in parallel to each other.

The metal plate may include a positive electrode plate electrically connecting positive electrodes of the pair of battery cells to each other, and a negative electrode plate electrically connecting negative electrodes of the pair of battery cells to each other, wherein the wire thermistor may electrically connect the negative electrode plate and the circuit board.

The wire thermistor may include a thermistor head provided to sense temperature and a pair of thermistor legs extending from the thermistor head, and the thermistor head may be disposed to be spaced apart from both ends of the pair of battery cells in the longitudinal direction.

The thermistor head may be disposed at a central part of the pair of battery cells in the longitudinal direction.

The thicknesses of the pair of thermistor legs may be different from each other.

The pair of thermistor legs may include a first leg extending between the thermistor head and the circuit board, and a second leg extending between the circuit board and the negative electrode plate.

The second leg may have a greater thickness than the first leg.

The first leg may be connected to a micro control unit provided on the circuit board.

The battery assembly may further include a taping unit attached to the pair of battery cells so that the pair of thermistor legs are spaced apart from the pair of battery cells.

The battery assembly may further include an insulation unit provided so that the pair of battery cells are spaced apart from the circuit board, and a cover unit provided to cover the circuit board to protect the circuit board from the outside.

The battery assembly may further include an exterior material unit provided to surround the pair of battery cells.

### ADVANTAGEOUS EFFECTS

The battery assembly according to an embodiment of the present disclosure may secure temperature stability through temperature measurement of a battery cell.

The battery assembly according to an embodiment of the present disclosure may improve processability by electrically connecting a negative electrode of a battery cell and a circuit board through a thermistor.

In addition, effects that may be easily predicted by those skilled in the art from configurations according to embodiments of the present disclosure may be included.

### BRIEF DESCRIPTION OF THE DRAWINGS

FIG. 1 is a schematic view of a device where a battery assembly according to Embodiment 1 of the present disclosure is mounted.
FIG. 2 is a schematic perspective view of a battery assembly according to Embodiment 1 of the present disclosure.
FIG. 3 is a front view showing a battery assembly according to Embodiment 1 of the present disclosure.
FIG. 4 is an exploded perspective view of a battery assembly according to Embodiment 1 of the present disclosure.
FIG. 5 is a schematic circuit diagram showing an electrical connection structure of a battery assembly according to Embodiment 1 of the present disclosure.
FIG. 6 is a view schematically showing a wire thermistor of a battery assembly according to Embodiment 1 of the present disclosure.
FIG. 7 is a cross-sectional view showing a structure of a battery assembly according to Embodiment 2 of the present disclosure.

### DETAILED DESCRIPTION

Hereinafter, preferred embodiments of the present disclosure will be described in detail with reference to the accompanying drawings to enable those having ordinary skill in the technical field to which the present disclosure appertains to easily carry out the present disclosure. The following description is one of several aspects of the embodiments, and in describing one embodiment, a specific description of a known function or configuration will be omitted to clarify the gist of the present disclosure.

In this specification, in affixing the reference numerals to the elements in each drawing, the identical or similar reference numerals are affixed to the identical or similar elements throughout the specification. Components included in any one embodiment and components including common functions will be described using the same names in other embodiments. It should be understood that the terms or words used in this specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Additionally, the present disclosure is not limited to the embodiments described above, and various modifications and variations may be made from these descriptions by those having ordinary skill in the field to which the present disclosure appertains. Therefore, the idea of the present disclosure should not be limited to the embodiments described above, and all equivalents or equivalent variations of the claims as well as the claims to be described later will be said to fall within the scope of the idea of the present disclosure.

### Embodiment 1

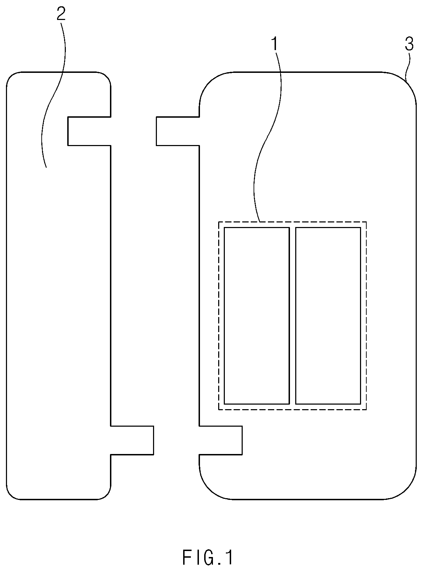

FIG. 1 is a schematic view of a device where a battery assembly 1 according to Embodiment 1 of the present disclosure is mounted. It should be noted that each component shown in FIG. 1 is conceptually shown for convenience of description, and in advance that the shapes of the components are not limited to those shown.

Referring to FIG. 1, the battery assembly 1 according to Embodiment 1 of the present disclosure may be mounted on a battery pack 3. The battery pack 3 may be provided to charge a battery device 2, and for example, the battery pack 3 may be coupled to the battery device 2 to supply power to the battery device 2. The battery device 2 is, for example, a stick-type electronic cigarette, and may be charged by receiving power from the battery pack 3 in a manner that it is accommodated in the battery pack 3 or fastened to the battery pack 3.

The battery pack 3 and the battery device 2 may electrically communicate with each other in a coupled state, for example, through a coupling structure provided to be mutually coupled.

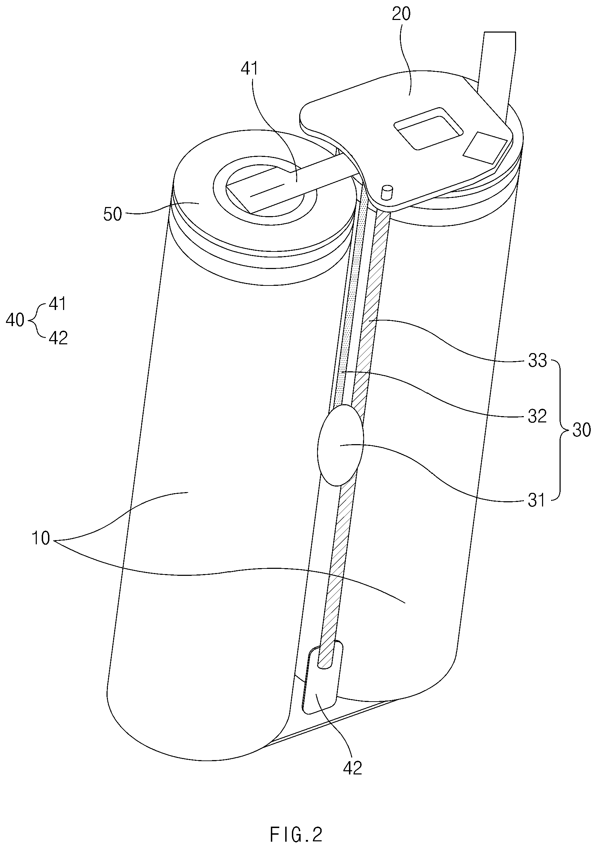

The battery assembly 1 accommodated in the battery pack 3 may be provided in a 1S2P (one series, two parallel) type in which two battery cells are connected in parallel to maximize capacity. The battery cells used in the battery assembly 1 may be, for example, cylindrical battery cells, and 18650 lithium-ion secondary batteries may be used. More detailed information about the battery assembly 1 will be described with reference to FIGS. 2 to 4 below.

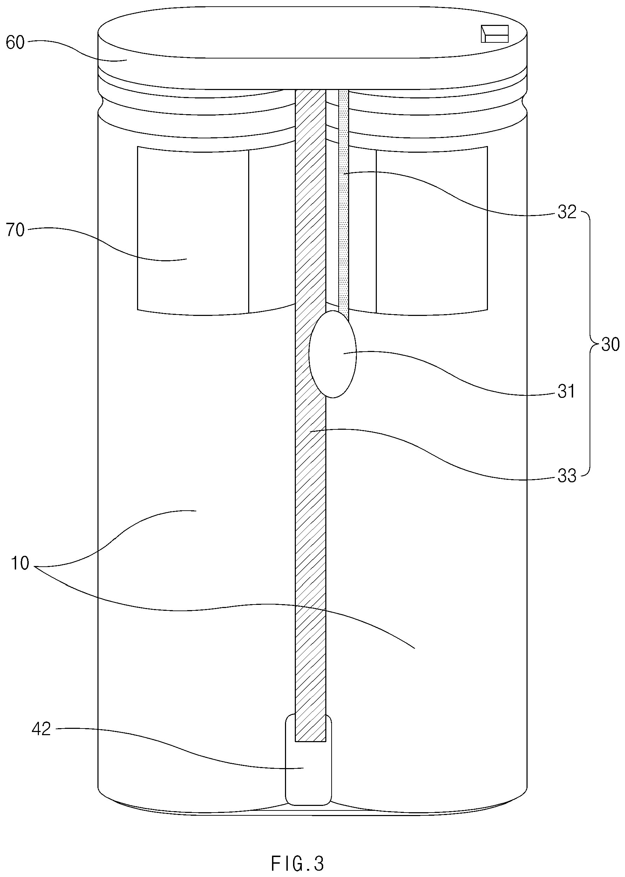

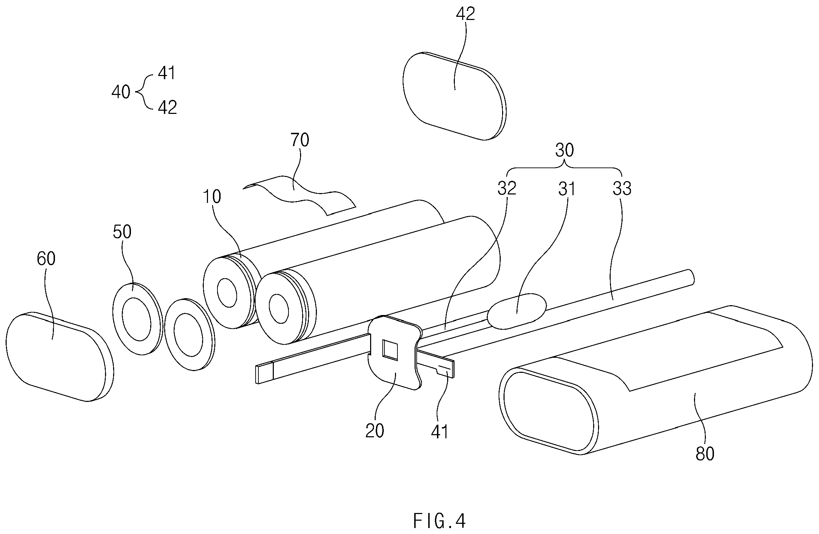

FIGS. 2 to 4 are views showing a battery assembly 1 according to Embodiment 1 of the present disclosure. FIG. 2 is a schematic perspective view of a battery assembly 1 according to Embodiment 1 of the present disclosure. FIG. 3 is a front view showing a battery assembly 1 according to Embodiment 1 of the present disclosure. FIG. 4 is an exploded perspective view of a battery assembly 1 according to Embodiment 1 of the present disclosure.

Referring to FIGS. 2 to 4, the battery assembly 1 according to Embodiment 1 of the present disclosure may include a battery cell 10, a circuit board 20, and a wire thermistor 30. The battery assembly 1 according to Embodiment 1 of the present disclosure may further include a metal plate 40.

The battery cells 10 may be provided as a pair. Each of the pair of battery cells 10 may be provided in a cylindrical shape having a longitudinal direction. One end of each battery cell 10 in the longitudinal direction may be provided as a positive electrode, and the other end thereof may be provided as a negative electrode. The pair of battery cells may be disposed side by side so that the pair of positive electrodes and the pair of negative electrodes are adjacent to each other. The pair of battery cells 10 may be electrically connected to each other. The pair of battery cells 10 may have the same size, shape, and capacity and may be electrically connected in parallel. The battery cells 10 may be electrically connected via the metal plate 40. The pair of battery cells 10 may be disposed side by side parallel to each other, and may be placed in a state of being spaced apart from each other by a predetermined distance.

The metal plate 40 may be provided to electrically connect a pair of battery cells to each other. The metal plate 40 may electrically connect a pair of battery cells in parallel.

The metal plate 40 may include a positive electrode plate 41 and a negative electrode plate 42. The positive electrode plate 41 may be provided to electrically connect positive electrodes of a pair of neighboring battery cells 10 to each other. The negative electrode plate 42 may be provided to electrically connect negative electrodes of a pair of neighboring battery cells 10 to each other. The positive electrode plate 41 and the negative electrode plate 42 may extend between two positive electrodes and negative electrodes that are adjacent to each other, respectively. The positive electrode plate 41 may extend between two positive electrodes of the neighboring battery cells 10 and may be provided in the form of a flat plate having a longitudinal direction. The negative plate 42 may extend between two negative electrodes of the neighboring battery cells 10 and physically/electrically connect the two negative electrodes, and a protrusion may be provided at one portion to be easily connected to a second leg 33 of a wire thermistor 30 to be described later.

The pair of battery cells 10 may be connected in parallel in 1S2P via the positive electrode plate 41 and the negative electrode plate 42. The positive electrode plate 41 may be directly connected to the circuit board 20 that overlaps the pair of battery cells. The circuit board 20 may be physically/electrically connected to the positive electrode plate 41 by overlapping the positive electrode plate 41 in the longitudinal direction of the battery cell 10. The negative electrode plate 42 may be electrically connected to the circuit board 20 via the wire thermistor 30. Specifically, the negative electrode plate 42 may be connected to the circuit board 20 via the second leg 33 of the wire thermistor 30.

The circuit board 20 may be provided to be electrically connected to the pair of battery cells 10. The circuit board 20 may be electrically connected to the battery cells 10 via the metal plate 40 and the wire thermistor 30. The circuit board 20 may be a printed circuit board (PCB) provided to electrically control the state of the battery cell 10. The circuit board 20 may form at least one part of a battery management system (BMS) of the battery pack 3. The circuit board 20 may be provided to include a micro control unit (MCU), as will be described later. The circuit board 20 may be disposed at one end of the pair of battery cells 10 in the longitudinal direction. The circuit board 20 may be provided in the form of a plate having a predetermined thickness and may overlap one end of the pair of battery cells 10 in the longitudinal direction.

The wire thermistor 30 may be provided to sense a temperature of the battery cell 10. The wire thermistor 30 of the battery assembly according to Embodiment 1 of the present disclosure may be a negative temperature coefficient thermistor (NTC thermistor) whose resistance value decreases according to an increase in temperature.

The wire thermistor 30 may be positioned between a pair of battery cells 10 that are spaced apart from each other. The wire thermistor 30 may be provided to sense the temperature of a central part of the pair of battery cells 10 in the longitudinal direction.

The wire thermistor 30 may include a thermistor head 31 and a pair of thermistor legs 32, 33.

The thermistor head 31 may be provided to sense temperature. The thermistor head 31 may be provided to include an electric resistor provided to decrease resistance as the temperature rises. The thermistor head 31 may be, for example, an electric resistor provided to decrease resistance as the temperature rises.

The thermistor head 31 may be positioned between a pair of battery cells 10 spaced apart from each other, and may be disposed at a central part of the battery cell 10 in the longitudinal direction. In this case, the thermistor head 31 may be supported by a pair of thermistor legs 32, 33. By adopting such a configuration, the thermistor head 31 may effectively sense the temperature of the central part of the battery cell 10 in the longitudinal direction, which is at the highest temperature during operation of the battery.

The pair of thermistor legs 32, 33 may be provided in a form extending from the thermistor head 31. The pair of thermistor legs 32, 33 may include a first leg 32 and a second leg 33. As will be described later, the first leg 32 and the second leg 33 may be formed to have different lengths and thicknesses.

The first leg 32 may extend between the thermistor head 31 placed at the central part of the battery cell 10 in the longitudinal direction and the circuit board 20. The second leg 33 may extend between the negative electrode plate 42 coupled to ends of the pair of battery cells 10 and the circuit board 20.

The first leg 32 and the second leg 33 may each serve as a current-conducting wire. The thermistor head 31 electrically connects the first leg 32 and the second leg 33, and as the resistance value changes due to the temperature of the battery cell 10, the amount of current flowing between the first leg 32 and the second leg 33 may change.

By adopting such a configuration, the wire thermistor 30 may connect the negative electrode of the battery cell 10 and the circuit board 20 without a separate wiring structure that electrically connects the negative electrode of the battery cell 10 and the circuit board 20, and the complexity of the battery assembly may be reduced and processability may be improved.

The battery assembly 1 according to Embodiment 1 of the present disclosure may further include an insulation unit 50, a cover unit 60, a taping unit 70, and an exterior material unit 80.

The insulation unit 50 may be provided so that the battery cell 10 is spaced apart from the circuit board 20, and may overlap between the positive electrode plate 41 and the battery cell 10. The insulation unit 50 may prevent direct contact between the circuit board 20 and the positive electrode of the battery cell 10. The insulation unit 50 may be provided in the form of, for example, an insulation tape.

The cover unit 60 may be provided to protect the positive electrode of the battery cell 10 and the circuit board 20. The cover unit 60 may be coupled to the positive electrode portion of the battery cell 10 to cover the circuit board 20. The cover unit 60 may be provided in the form of a cap having both arc-shaped ends corresponding to the shape of the battery cell 10 having a cylindrical shape. The cover unit 60 may be formed of a rigid body having a predetermined rigidity, and may protect the positive electrode portion of the battery cell 10 including the circuit board 20, the positive electrode plate 41, and the insulation unit 50 from external impact and foreign substances.

The taping unit 70 may be provided so that the wire thermistor 30 disposed between the pair of battery cells 10 spaced apart from each other is spaced apart from the battery cell 10 so as not to contact the battery cell 10. The taping unit 70 may allow the thermistor legs 32, 33 of the wire thermistor 30 to be spaced apart from the battery cell 10. The taping unit 70 may be made of a flexible material whose shape can be changed, and may be provided to adhere to both of the pair of battery cells 10 spaced apart from each other. The thermistor legs 32, 33 of the wire thermistor 30 may be supported in an overlapped state on the taping unit 70 attached to the battery cell 10.

The exterior material unit 80 may be provided to surround the coupled pair of battery cells 10, the circuit board 20, and the wire thermistor 30. The exterior material unit may be formed in the form of a shrink film.

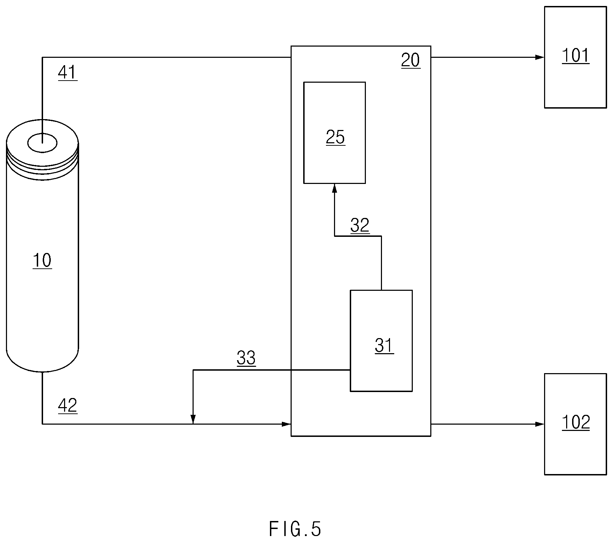

FIG. 5 is a schematic circuit diagram showing an electrical connection structure of a battery assembly according to Embodiment 1 of the present disclosure.

Referring to FIG. 5, the battery cell 10 of the battery assembly according to Embodiment 1 of the present disclosure may be electrically connected to the circuit board 20 through the positive electrode plate 41 and the negative electrode plate 42. The positive electrode plate 41 electrically connecting the positive electrodes of the pair of battery cells 10 is connected by directly contacting the circuit board 20, and the negative electrode plate 42 may be connected to the circuit board 20 via the second leg 33 of the wire thermistor 30.

As described above, the circuit board 20 may be provided with a micro control unit (MCU) 25. The micro control unit 25 may be provided to include a microprocessor, a memory, a programmable input/output module, and the like. The first leg 32 may electrically connect the thermistor head 31 and the micro control unit 25 of the circuit board 20. The positive electrode plate 41 connecting the positive electrode of the battery cell and the negative electrode plate 42 connecting the negative electrode may be electrically connected to a pack positive electrode 101 and a pack negative electrode 102 of the battery pack, respectively.

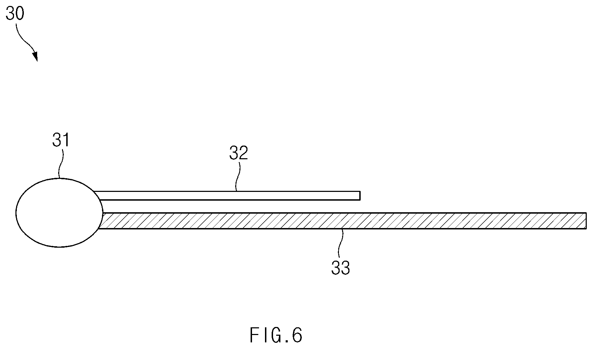

FIG. 6 is a view schematically showing a wire thermistor of a battery assembly according to Embodiment 1 of the present disclosure.

Referring to FIG. 6, the wire thermistor 30 of the battery assembly according to Embodiment 1 of the present disclosure may include a thermistor head 31 and a pair of thermistor legs 32, 33 having different lengths and thicknesses.

In other words, the thermistor legs 32, 33 may extend from the thermistor head 31 and may have different lengths and thicknesses. Specifically, the second leg 33 may be provided to electrically connect the negative electrodes of the pair of battery cells 10 and the circuit board 20, so that a larger amount of current may be conducted compared to the first leg 32, and thus the second leg 33 may be provided to have a greater thickness than the first leg 32. Additionally, since the second leg 33 extends between the negative electrode plate 42 connecting the negative electrode of the battery cell 10 and the circuit board 20, it may have a longer length than the first leg 32 extending between the thermistor head 31 and the circuit board 20. The shapes and structures of the thermistor head 31, the first leg 32, and the second leg 33 are not limited to those shown.

### Embodiment 2

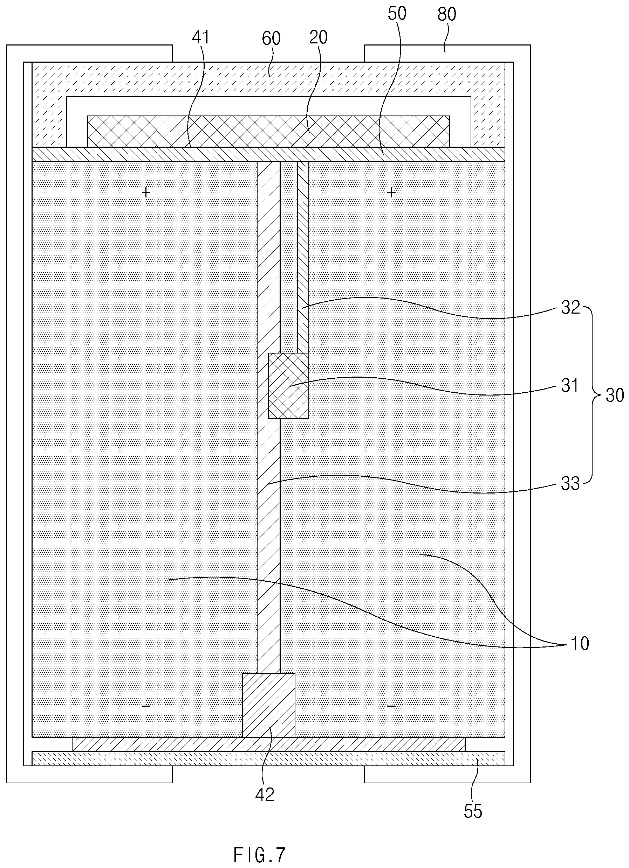

FIG. 7 is a cross-sectional view showing a structure of a battery assembly according to Embodiment 2 of the present disclosure.

Embodiment 2 of the present disclosure may differ from Embodiment 1 in that it further includes the configuration of a support sheet 55. Except for the differences, it should be noted that the contents of the secondary battery according to Embodiment 1 of the present disclosure described above may be commonly applied to Embodiment 2, and therefore, contents common to Embodiment 1 will be omitted as much as possible, and Embodiment 2 will be described focusing on the differences from Embodiment 1.

Referring to FIG. 7, the battery assembly according to Embodiment 2 of the present disclosure may further include a support sheet 55. The support sheet 55 may be disposed between the exterior material unit 80 and the negative electrode plate 42 to support the battery cell 10 and the negative electrode plate 42 and to secure insulation of the negative electrode plate 42. The support plate 42 may be made of a polycarbonate (PC) material that is rigid enough to support the battery structure while securing electrical insulation.

In the above description, the present disclosure has been described with regard to a limited number of embodiments and drawings, but the above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments. The scope of protection of the present disclosure should be interpreted in accordance with the claims below, and all technical ideas within the scope equivalent thereto should be construed as being included in the scope of the present disclosure.

### [List of Reference Numerals]

1: Battery assembly
2: Battery device
3: Battery pack
10: Battery cell
20: Circuit board
30: Wire thermistor
31: Thermistor head
32: First leg
33: Second leg
40: Metal plate
41: Positive electrode plate
42: Negative electrode plate
50: Insulation unit
60: Cover unit
70: Taping unit
80: Exterior material unit
101: Pack positive electrode
102: Pack negative electrode

## Claims

1. A battery assembly comprising:
a pair of battery cells connected in parallel to each other;
a circuit board disposed at one end of the pair of battery cells to be electrically connected to the pair of battery cells; and
a wire thermistor provided to sense temperatures of the pair of battery cells and to be electrically connected to the pair of battery cells and the circuit board.

2. The battery assembly according to claim 1,
wherein the pair of battery cells have a cylindrical shape having a longitudinal direction and are disposed parallel to each other, and
the wire thermistor is positioned between the pair of battery cells.

3. The battery assembly according to claim 1, further comprising:
a metal plate connecting the pair of battery cells in parallel to each other.

4. The battery assembly according to claim 3,
wherein the metal plate comprises:
a positive electrode plate electrically connecting positive electrodes of the pair of battery cells to each other; and
a negative electrode plate electrically connecting negative electrodes of the pair of battery cells to each other,
wherein the wire thermistor electrically connects the negative electrode plate and the circuit board.

5. The battery assembly according to claim 4,
wherein the wire thermistor comprises a thermistor head provided to sense temperature and a pair of thermistor legs extending from the thermistor head, and
the thermistor head is disposed to be spaced apart from both ends of the pair of battery cells in the longitudinal direction.

6. The battery assembly according to claim 5,
wherein the thermistor head is disposed at a central part of the pair of battery cells in the longitudinal direction.

7. The battery assembly according to claim 5,
wherein the thicknesses of the pair of thermistor legs are different from each other.

8. The battery assembly according to claim 5,
wherein the pair of thermistor legs comprise:
a first leg extending between the thermistor head and the circuit board; and
a second leg extending between the circuit board and the negative electrode plate.

9. The battery assembly according to claim 8,
wherein the second leg has a greater thickness than the first leg.

10. The battery assembly according to claim 8,
wherein the first leg is connected to a micro control unit provided on the circuit board.

11. The battery assembly according to claim 5, further comprising:
a taping unit attached to the pair of battery cells so that the pair of thermistor legs are spaced apart from the pair of battery cells.

12. The battery assembly according to claim 4, further comprising:
an insulation unit provided so that the pair of battery cells are spaced apart from the circuit board; and
a cover unit provided to cover the circuit board to protect the circuit board from the outside.

13. The battery assembly according to claim 1, further comprising:
an exterior material unit provided to surround the pair of battery cells.
